# EUROPEAN PATENT SPECIFICATION

(11) **EP 4 374 202 B1**
(45) Date of publication and mention of the grant of the patent: **29.04.2026**
(21) Application number: 22783385.2
(22) Date of filing: 19.07.2022
(51) Int. Cl.: G02B 5/18, G02B 27/00, G02B 27/01

(54) **OPTICAL SYSTEMS WITH HOLOGRAPHIC GRATINGS**
OPTISCHE SYSTEME MIT HOLOGRAPHISCHEN GITTERN
SYSTÈMES OPTIQUES À RÉSEAUX HOLOGRAPHIQUES

(30) Priority: 23.07.2021 US 202163225299 P; 15.10.2021 US 202163256441 P
(43) Date of publication of application: 29.05.2024
(73) Proprietor: Apple Inc., Cupertino CA 95014 (US)
(72) Inventor: WANG, Yifei, Cupertino, CA 95014 (US); FU, Xiaoyong, Cupertino, CA 95014 (US); ZHU, Wencong, Cupertino, CA 95014 (US); ZHAO, Xianwei, Cupertino, CA 95014 (US); BORN, Brandon, Cupertino, CA 95014 (US)
(74) Representative: Zacco Denmark A/S
(86) International application number: PCT/US2022/037560
(87) International publication number: WO 2023/003854

(56) References cited:
- US-A1- 2016 167 422
- US-A1- 2020 209 483
- US-A1- 2021 157 148

## Description

This application claims priority to U.S. provisional patent application No. 63/225,299, filed July 23, 2021, and to U.S. provisional patent application No. 63/256,441, filed October 15, 2021.

### Background

This disclosure relates generally to optical systems and, more particularly, to optical systems for electronic devices with displays.

Electronic devices often include displays that present images close to a user's eyes. For example, virtual and augmented reality headsets may include displays with optical elements that allow users to view the displays.

Devices such as these can be challenging to design. If care is not taken, the components used to display images in these devices can be unsightly and bulky and may not exhibit a desired optical performance. US 2020/0209483 A1 discloses a waveguide configured to propagate image light via total internal reflection and comprising first and second surface relief grating structures comprising a blazed grating that comprises ridges formed from a first material and a coating over the ridges formed of a second material that has a refractive index different from that of the first material.

### Summary

The invention is directed to a display system as recited in appended independent claim 1. Other aspects of the invention are recited in the appended dependent claims. An electronic device may have a display system. The display system may include a waveguide, an input coupler, and a surface relief grating (SRG) structure. The input coupler may couple image light into the waveguide. The image light may propagate down the waveguide via total internal reflection. The SRG structure may perform a cross-coupling operation in which the SRG structure expands the image light in a direction perpendicular to the direction of propagation. The SRG structure may also perform an output coupling operation in which the SRG structure couples the expanded image light out of the waveguide and towards an eye box. The SRG structure may be modulated across its lateral area to maximize the optical efficiency of the system.

The SRG structure may be formed from a high-index material that includes titanium dioxide nanoparticles. The nanoparticles may include a nanoparticle core and a capping layer. To increase the refractive index of the high-index material, the ratio of the size of the nanoparticle core to the size of the capping layer may be increased. The high-index material may also include nanoparticles of different sizes to increase the packing density of the nanoparticles.

The SRG structure may be depth modulated in a lateral direction to maximize efficiency. The SRG structure may include ridges with a gradually changing height. The SRG structure may include ridges with a gradually changing trough depth. The SRG structure may include ridges of varying height on a sloped substrate.

The SRG structure may include slanted ridges covered by an encapsulant. The SRG structure may include a blazed grating with ridges that are coated with a coating and encapsulated by an encapsulant.

### Brief Description of the Drawings

FIG. 1 is a diagram of an illustrative system having a display in accordance with some embodiments.
FIG. 2 is a top view of an illustrative optical system for a display having a waveguide with optical couplers in accordance with some embodiments.
FIGS. 3A-3C are top views of illustrative waveguides provided with a surface relief grating structure in accordance with some embodiments.
FIG. 4 is a top view of an illustrative nanoparticle that may be used to form a surface relief grating structure in accordance with some embodiments.
FIG. 5 is a top view of illustrative nanoparticles of different sizes that may be used to form a surface relief grating structure in accordance with some embodiments.
FIG. 6 is a front view of an illustrative surface relief grating structure having surface relief gratings that are modulated across its area in accordance with some embodiments.
FIG. 7 is a cross-sectional side view of an illustrative surface relief grating structure having ridges with varying heights on a planar substrate in accordance with some embodiments.
FIG. 8 is a cross-sectional side view of an illustrative surface relief grating structure having ridges with varying trough depths on a planar substrate in accordance with some embodiments.
FIG. 9 is a cross-sectional side view of an illustrative surface relief grating structure having ridges on a sloped surface in accordance with some embodiments.
FIG. 10 is a cross-sectional side view of an illustrative optical system having surface relief grating structures with slanted ridges in accordance with some embodiments.
FIG. 11 is a k-space diagram illustrating the operation of a surface relief grating structure as in FIG. 10 in accordance with some embodiments.
FIG. 12A is a top view of an illustrative surface relief grating structure with straight ridges in accordance with some embodiments.
FIG. 12B is a top view of an illustrative surface relief grating structure with wavy ridges in accordance with some embodiments.
FIG. 13 is a cross-sectional side view of an illustrative optical system having surface relief grating structures with blazed gratings in accordance with some embodiments.
FIGS. 14A and 14B are diagrams showing method steps for forming an illustrative surface relief grating structure with blazed gratings in accordance with some embodiments.
FIG. 15 is a top view of an illustrative surface relief grating structure with an edge portion having a varying coating thickness to mitigate visible artifacts in accordance with some embodiments.
FIG. 16 is a graph of coating thickness as a function of position for the surface relief grating structure of FIG. 15 in accordance with some embodiments.

### Detailed Description

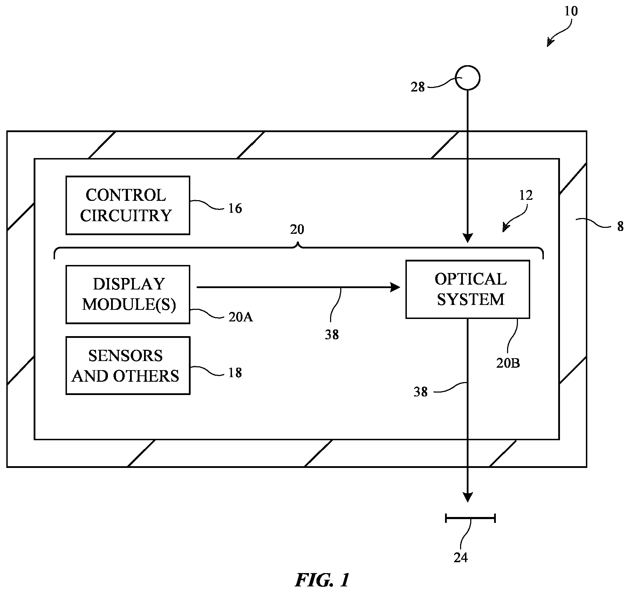

System 10 of FIG. 1 may be a head-mounted device having one or more displays. The displays in system 10 may include near-eye displays 20 mounted within support structure (housing) 8. Support structure 8 may have the shape of a pair of eyeglasses or goggles (e.g., supporting frames), may form a housing having a helmet shape, or may have other configurations to help in mounting and securing the components of near-eye displays 20 on the head or near the eye of a user. Near-eye displays 20 may include one or more display modules such as display modules 20A and one or more optical systems such as optical systems 20B. Display modules 20A may be mounted in a support structure such as support structure 8. Each display module 20A may emit light 38 (image light) that is redirected towards a user's eyes at eye box 24 using an associated one of optical systems 20B.

The operation of system 10 may be controlled using control circuitry 16. Control circuitry 16 may include storage and processing circuitry for controlling the operation of system 10. Circuitry 16 may include storage such as hard disk drive storage, nonvolatile memory (e.g., electrically-programmable-read-only memory configured to form a solid state drive), volatile memory (e.g., static or dynamic random-access-memory), etc. Processing circuitry in control circuitry 16 may be based on one or more microprocessors, microcontrollers, digital signal processors, baseband processors, power management units, audio chips, graphics processing units, application specific integrated circuits, and other integrated circuits. Software code may be stored on storage in circuitry 16 and run on processing circuitry in circuitry 16 to implement operations for system 10 (e.g., data gathering operations, operations involving the adjustment of components using control signals, image rendering operations to produce image content to be displayed for a user, etc.).

System 10 may include input-output circuitry such as input-output devices 12. Input-output devices 12 may be used to allow data to be received by system 10 from external equipment (e.g., a tethered computer, a portable device such as a handheld device or laptop computer, or other electrical equipment) and to allow a user to provide head-mounted device 10 with user input. Input-output devices 12 may also be used to gather information on the environment in which system 10 (e.g., head-mounted device 10) is operating. Output components in devices 12 may allow system 10 to provide a user with output and may be used to communicate with external electrical equipment. Input-output devices 12 may include sensors and other components 18 (e.g., image sensors for gathering images of real-world object that are digitally merged with virtual objects on a display in system 10, accelerometers, depth sensors, light sensors, haptic output devices, speakers, batteries, wireless communications circuits for communicating between system 10 and external electronic equipment, etc.).

Display modules 20A may be liquid crystal displays, organic light-emitting diode displays, laser-based displays, or displays of other types. Optical systems 20B may form lenses that allow a viewer (see, e.g., a viewer's eyes at eye box 24) to view images on display(s) 20. There may be two optical systems 20B (e.g., for forming left and right lenses) associated with respective left and right eyes of the user. A single display 20 may produce images for both eyes or a pair of displays 20 may be used to display images. In configurations with multiple displays (e.g., left and right eye displays), the focal length and positions of the lenses formed by system 20B may be selected so that any gap present between the displays will not be visible to a user (e.g., so that the images of the left and right displays overlap or merge seamlessly).

If desired, optical system 20B may contain components (e.g., an optical combiner, etc.) to allow real-world image light from real-world images or objects 28 to be combined optically with virtual (computer-generated) images such as virtual images in image light 38. In this type of system, which is sometimes referred to as an augmented reality system, a user of system 10 may view both real-world content and computer-generated content that is overlaid on top of the real-world content. Camera-based augmented reality systems may also be used in device 10 (e.g., in an arrangement in which a camera captures real-world images of object 28 and this content is digitally merged with virtual content at optical system 20B).

System 10 may, if desired, include wireless circuitry and/or other circuitry to support communications with a computer or other external equipment (e.g., a computer that supplies display 20 with image content). During operation, control circuitry 16 may supply image content to display 20. The content may be remotely received (e.g., from a computer or other content source coupled to system 10) and/or may be generated by control circuitry 16 (e.g., text, other computer-generated content, etc.). The content that is supplied to display 20 by control circuitry 16 may be viewed by a viewer at eye box 24.

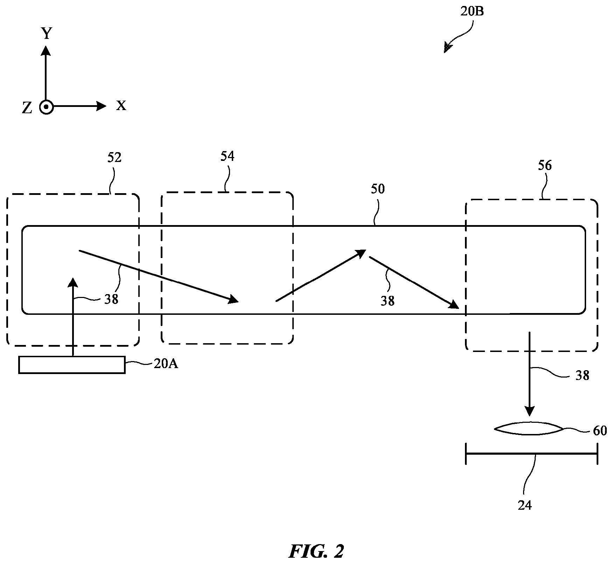

FIG. 2 is a top view of an illustrative display 20 that may be used in system 10 of FIG. 1. As shown in FIG. 2, near-eye display 20 may include one or more display modules such as display module(s) 20A and an optical system such as optical system 20B. Optical system 20B may include optical elements such as one or more waveguides 50. Waveguide 50 may include one or more stacked substrates (e.g., stacked planar and/or curved layers sometimes referred to herein as waveguide substrates) of optically transparent material such as plastic, polymer, glass, etc.

If desired, waveguide 50 may also include one or more layers of holographic recording media (sometimes referred to herein as holographic media, grating media, or diffraction grating media) on which one or more diffractive gratings are recorded (e.g., holographic phase gratings, sometimes referred to herein as holograms). A holographic recording may be stored as an optical interference pattern (e.g., alternating regions of different indices of refraction) within a photosensitive optical material such as the holographic media. The optical interference pattern may create a holographic phase grating that, when illuminated with a given light source, diffracts light to create a three-dimensional reconstruction of the holographic recording. The holographic phase grating may be a non-switchable diffractive grating that is encoded with a permanent interference pattern or may be a switchable diffractive grating in which the diffracted light can be modulated by controlling an electric field applied to the holographic recording medium. Multiple holographic phase gratings (holograms) may be recorded within (e.g., superimposed within) the same volume of holographic medium if desired. The holographic phase gratings may be, for example, volume holograms or thin-film holograms in the grating medium. The grating media may include photopolymers, gelatin such as dichromated gelatin, silver halides, holographic polymer dispersed liquid crystal, or other suitable holographic media.

Diffractive gratings on waveguide 50 may include holographic phase gratings such as volume holograms or thin-film holograms, meta-gratings, or any other desired diffractive grating structures. The diffractive gratings on waveguide 50 may also include surface relief gratings formed on one or more surfaces of the substrates in waveguides 26, gratings formed from patterns of metal structures, etc. The diffractive gratings may, for example, include multiple multiplexed gratings (e.g., holograms) that at least partially overlap within the same volume of grating medium (e.g., for diffracting different colors of light and/or light from a range of different input angles at one or more corresponding output angles). Other light redirecting elements such as louvered mirrors may be used in place of diffractive gratings in waveguide 50 if desired.

As shown in FIG. 2, display module 20A may generate image light 38 associated with image content to be displayed to eye box 24. Image light 38 may be collimated using a collimating lens if desired. Optical system 20B may be used to present image light 38 output from display module 20A to eye box 24. If desired, display module 20A may be mounted within support structure 8 of FIG. 1 while optical system 20B may be mounted between portions of support structure 8 (e.g., to form a lens that aligns with eye box 24). Other mounting arrangements may be used, if desired.

Optical system 20B may include one or more optical couplers (e.g., light redirecting elements) such as input coupler 52, cross-coupler 54, and output coupler 56. In the example of FIG. 2, input coupler 52, cross-coupler 54, and output coupler 56 are formed at or on waveguide 50. Input coupler 52, cross-coupler 54, and/or output coupler 56 may be completely embedded within the substrate layers of waveguide 50, may be partially embedded within the substrate layers of waveguide 50, may be mounted to waveguide 50 (e.g., mounted to an exterior surface of waveguide 50), etc.

Waveguide 50 guides image light 38 down its length via total internal reflection. Input coupler 52 may be configured to couple image light 38 from display module 20A into waveguide 50, whereas output coupler 56 may be configured to couple image light 38 from within waveguide 50 to the exterior of waveguide 50 and towards eye box 24. Input coupler 52 may include an input coupling prism, an edge or face of waveguide 50, a lens, a steering mirror or liquid crystal steering element, or any other desired input coupling elements. As an example, display module 20A may emit image light 38 in the +Y direction towards optical system 20B. When image light 48 strikes input coupler 52, input coupler 52 may redirect image light 38 so that the light propagates within waveguide 50 via total internal reflection towards output coupler 56 (e.g., in the +X direction within the total internal reflection (TIR) range of waveguide 50). When image light 38 strikes output coupler 56, output coupler 56 may redirect image light 38 out of waveguide 50 towards eye box 24 (e.g., back along the Y-axis). A lens such as lens 60 may help to direct or focus image light 38 onto eye box 24. Lens 60 may be omitted if desired. In scenarios where cross-coupler 54 is formed on waveguide 50, cross-coupler 54 may redirect image light 38 in one or more directions as it propagates down the length of waveguide 50, for example. In redirecting image light 38, cross-coupler 54 may also perform pupil expansion on image light 38.

Input coupler 52, cross-coupler 54, and/or output coupler 56 may be based on reflective and refractive optics or may be based on diffractive (e.g., holographic) optics. In arrangements where couplers 52, 54, and 56 are formed from reflective and refractive optics, couplers 52, 54, and 56 may include one or more reflectors (e.g., an array of micromirrors, partial mirrors, louvered mirrors, or other reflectors). In arrangements where couplers 52, 54, and 56 are based on diffractive optics, couplers 52, 54, and 56 may include diffractive gratings (e.g., volume holograms, surface relief gratings, etc.).

The example of FIG. 2 is merely illustrative. Optical system 14B may include multiple waveguides that are laterally and/or vertically stacked with respect to each other. Each waveguide may include one, two, all, or none of couplers 52, 54, and 56. Waveguide 50 may be at least partially curved or bent if desired. One or more of couplers 52, 54, and 56 may be omitted. If desired, optical system 20B may include an optical coupler such as a surface relief grating structure that performs the operations of both cross-coupler 54 and output coupler 56. For example, the surface relief grating structure may redirect image light 38 as the image propagates down waveguide 50 (e.g., while expanding the image light) and the surface relief grating structure may also couple image light 38 out of waveguide 50 and towards eye box 24.

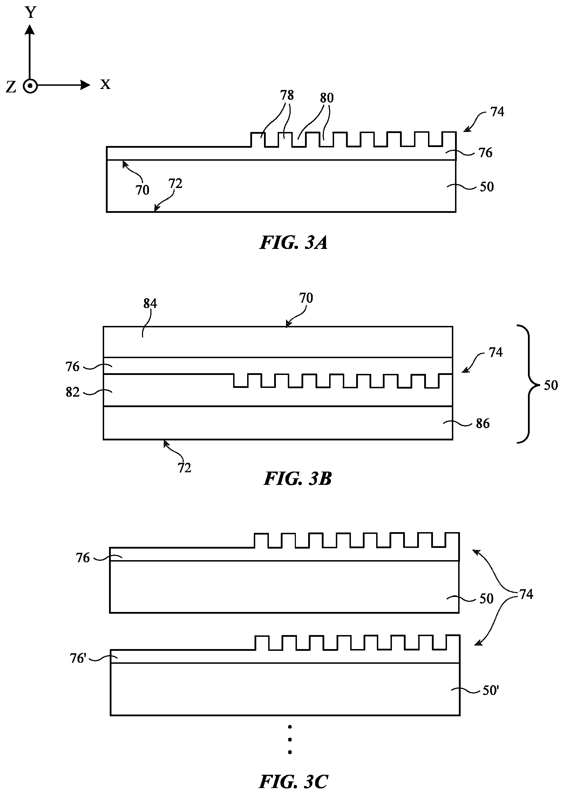

FIG. 3A is a top view showing one example of how a surface relief grating structure may be formed on waveguide 50. As shown in FIG. 3A, waveguide 50 may have a first lateral (e.g., exterior) surface 70 and a second lateral surface 72 opposite lateral surface 70. Waveguide 50 may include any desired number of one or more stacked waveguide substrates. If desired, waveguide 50 may also include a layer of grating medium sandwiched (interposed) between first and second waveguide substrates (e.g., where the first waveguide substrate includes lateral surface 70 and the second waveguide substrate includes lateral surface 72).

Waveguide 50 is provided with a surface relief grating structure such as surface relief grating structure 74. Surface relief grating (SRG) structure 74 may be formed within a substrate such as a layer of SRG substrate (medium) 76. In the example of FIG. 3A, SRG substrate 76 is layered onto lateral surface 70 of waveguide 50. This is merely illustrative and, if desired, SRG substrate 76 may be layered onto lateral surface 72 (e.g., the surface of waveguide 50 that faces the eye box).

SRG structure 74 may include at least two partially-overlapping surface relief gratings. Each surface relief grating in SRG structure 74 may be defined by corresponding ridges (peaks) 78 and troughs (minima) 80 in the thickness of SRG substrate 76. In the example of FIG. 3A, SRG structure 74 is illustrated for the sake of clarity as a binary structure in which the surface relief gratings in SRG structure 74 are defined either by a first thickness associated with peaks 78 or a second thickness associated with troughs 80. This is merely illustrative. If desired, SRG structure 74 may be non-binary (e.g., may include any desired number of thicknesses following any desired profile, may include peaks 78 that are angled at non-parallel fringe angles with respect to the Y axis, etc.). If desired, SRG substrate 76 may be adhered to lateral surface 70 of waveguide 50 using a layer of adhesive (not shown). SRG structure 74 may be fabricated separately from waveguide 50 and may be adhered to waveguide 50 after fabrication, for example. As another example, ridges 78 may be patterned to substrate 50 without an intervening SRG substrate 76.

The example of FIG. 3A is merely illustrative. In another implementation, SRG structure 74 may be placed at a location within the interior of waveguide 50, as shown in the example of FIG. 3B. As shown in FIG. 3B, waveguide 50 may include a first waveguide substrate 84, a second waveguide substrate 86, and a media layer 82 interposed between waveguide substrate 84 and waveguide substrate 86. Media layer 82 may be a grating or holographic recording medium, a layer of adhesive, a polymer layer, a layer of waveguide substrate, or any other desired layer within waveguide 50. SRG substrate 76 may be layered onto the surface of waveguide substrate 84 that faces waveguide substrate 86. Alternatively, SRG substrate 76 may be layered onto the surface of waveguide substrate 86 that faces waveguide substrate 84.

If desired, SRG structure 74 may be distributed across multiple layers of SRG substrate, as shown in the example of FIG. 3C. As shown in FIG. 3C, the optical system may include multiple stacked waveguides such as at least a first waveguide 50 and a second waveguide 50'. A first SRG substrate 76 may be layered onto one of the lateral surfaces of waveguide 50 whereas a second SRG substrate 76' is layered onto one of the lateral surfaces of waveguide 50'. First SRG substrate 76 may include one or more of the surface relief gratings in SRG structure 74. Second SRG substrate 76' may include one or more of the surface relief gratings in SRG structure 74. This example is merely illustrative. If desired, the optical system may include more than two stacked waveguides. In examples where the optical system includes more than two waveguides, each waveguide that is provided with an SRG substrate may include one or more of the surface relief gratings in SRG structure 74. While described herein as separate waveguides, waveguides 50 and 50' of FIG. 3C may also be formed from respective waveguide substrates of the same waveguide, if desired. The arrangements in FIGS. 3A, 3B, and/or 3C may be combined if desired.

If desired, multiple surface relief gratings may be co-located for redirecting (expanding) image light 38 in different directions (e.g., in an overlapping or interleaved arrangement in or on waveguide 50). The surface relief gratings in SRG structure 74 may overlap in physical space (e.g., when viewed in the -Y direction of FIGS. 3A-3C) and, in implementations where only a single SRG substrate 76 is used, may each at least partially overlap within the same volume of SRG substrate 76. Despite overlapping on waveguide 50, the surface relief gratings in SRG structure 74 may diffract incoming light from and/or onto different respective directions.

There are numerous possible ways to produce SRG structures. One method is to use nanoimprinting. In nanoimprinting, a high-index resin may be formed on a substrate. A nanoimprinting mold is pressed into the high-index resin to produce ridges and troughs that define the surface relief grating. Nanoimprinting may have a relatively low associated manufacturing cost and high manufacturing throughput. However, the high-index resin used during the nanoimprinting process may have a limited index of refraction. In other words, it would be desirable to use a material having a higher index of refraction for the nanoimprinting process.

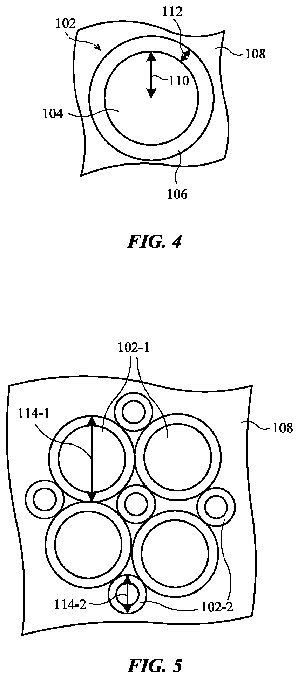

The high-index resin used for nanoimprinting may include nanoparticles. FIG. 4 is a top view of an illustrative nanoparticle that may form a high-index resin for nanoimprinting. As shown in FIG. 4, a nanoparticle 102 includes a nanoparticle core 104 and at least one capping layer 106. The capping layer 106 (sometimes referred to as capping agent(s) 106, cladding layer 106, etc.) modifies the surface of the nanoparticle core. A binder material 108 may also be included that includes a plurality of dispersed nanoparticles having the arrangement shown in FIG. 4. To summarize, a high-index resin that is used for nanoimprinting to form SRG structures may include a plurality of nanoparticles distributed within a binder. The nanoparticles may each include a core and a capping layer.

Nanoparticle cores 104 may be formed from titanium dioxide or another desired high-index material. The index of refraction of cores 104 may be greater than 1.5, greater than 1.8, greater than 2.0, greater than 2.2, greater than 2.4, greater than 2.5, etc. Capping layer 106 may include one or more materials that improve dispersibility, compatibility, and surface effects in the high-index resin that forms SRG structures. Binder 108 may be formed from propylene glycol methyl ether acetate (PGMEA), a UV-curable monomer, or any other desired material.

The refractive index of capping layer 106 may be less than the refractive index of core 104 (e.g., by greater than 0.1, greater than 0.3, greater than 0.5, greater than 0.7, greater than 1, etc.). Similarly, the refractive index of binder 108 may be less than the refractive index of core 104 (e.g., by greater than 0.1, greater than 0.3, greater than 0.5, greater than 0.7, greater than 1, etc.). Core 104, capping layer 106, and binder 108 may each have a high transparency (e.g., greater than 50%, greater than 60%, greater than 70%, greater than 80%, greater than 90%, greater than 95%, greater than 99%, etc.).

Since core 104 has a higher refractive index than capping layer 106, one way to maximize refractive index for the overall high-index resin is to increase the size of core 104 relative to capping layer 106. Each nanoparticle core 104 has a radius 110. The capping layer 106 has a thickness 112. It should be understood that the radius 110 and thickness 112 may not necessarily be constant across the entire nanoparticle 102. The terms radius and thickness may therefore refer to the average dimension across the entire nanoparticle.

Increasing the magnitude of radius 110 relative to thickness 112 increases the refractive index of the nanoparticle. Therefore, thickness 112 may be less than 33% the magnitude of radius 110, thickness 112 may be less than 25% the magnitude of radius 110, thickness 112 may be less than 20% the magnitude of radius 110, thickness 112 may be less than 15% the magnitude of radius 110, thickness 112 may be less than 10% the magnitude of radius 110, thickness 112 may be less than 5% the magnitude of radius 110, thickness 112 may be less than 3% the magnitude of radius 110, etc.

Thickness 112 may be less than 3 nanometers, less than 2.5 nanometers, less than 2 nanometers, less than 1.5 nanometers, less than 1 nanometer, less than 0.5 nanometers, etc. Radius 110 may be greater than 6 nanometers, greater than 7 nanometers, greater than 8 nanometers, greater than 9 nanometers, greater than 10 nanometers, greater than 12 nanometers, greater than 15 nanometers, etc. As one specific example, thickness 112 may be (within 5% of) 1 nanometer whereas radius 110 may be (within 5% of) 9 nanometers. In this example, thickness 112 is about 11% the magnitude of radius 110.

Increasing the size of core 104 also increases the refractive index of the nanoparticle. When the capping layer thickness 112 remains constant, a larger core will result in a higher total refractive index for the nanoparticle. Therefore, larger nanoparticle cores (e.g., with radii greater than 10 nanometers, greater than 12 nanometers, greater than 15 nanometers, etc.) may be used to increase refractive index.

Yet another way to increase the refractive index of the high-index resin is to increase the refractive index of binder 108. Binder 108 may be formed from a material having a high transparency (e.g., greater than 50%, greater than 60%, greater than 70%, greater than 80%, greater than 90%, greater than 95%, greater than 99%, etc.) and a relatively high index of refraction (e.g., greater than 1.5, greater than 1.55, greater than 1.6, greater than 1.65, between 1.6 and 1.7, between 1.5 and 1.7, etc.).

FIG. 5 is a top view of another high-index resin that may be used to form SRG structures. As shown, the high-index resin may include first nanoparticles 102-1 having a first nanoparticle diameter 114-1 and second nanoparticles 102-2 having a second nanoparticle diameter 114-2. It should be understood that the diameters 114 may not necessarily be constant across the entire nanoparticle 102. The terms diameter may therefore refer to the average dimension across the entire nanoparticle. Each nanoparticle in FIG. 5 has a core and capping layer as discussed in connection with FIG. 4. The nanoparticles in FIG. 5 are distributed in binder 108 as discussed in connection with FIG. 4.

There are numerous advantages to using nanoparticles of different sizes in a single high-index resin. Consider an example where only the larger nanoparticles 102-1 are formed in the resin. The packing density of the larger nanoparticles is limited. The amount of total volume that can be occupied by the high-index cores is therefore limited. To increase the amount of volume in the resin that is occupied by the high-index cores, smaller nanoparticles may be included in addition to the larger nanoparticles. The smaller nanoparticles fill in the space between the larger nanoparticles, as shown in FIG. 5. The total volume occupied by the high-index cores is therefore higher than when only one size nanoparticle is used.

Each nanoparticle may have a core radius and capping layer thickness within the ranges described in connection with FIG. 4. The total nanoparticle diameter 114-2 for particles 102-2 may be less than total nanoparticle diameter 114-1 for particles 102-1. Diameter 114-1 may be greater than 15 nanometers, greater than 18 nanometers, greater than 20 nanometers, greater than 25 nanometers, greater than 30 nanometers, greater than 35 nanometers, greater than 50 nanometers, less than 40 nanometers, between 25 nanometers and 30 nanometers, etc.

Diameter 114-2 may be greater than 5 nanometers, greater than 10 nanometers, greater than 15 nanometers, greater than 20 nanometers, greater than 25 nanometers, less than 5 nanometers, less than 10 nanometers, less than 15 nanometers, less than 20 nanometers, less than 25 nanometers, between 15 nanometers and 25 nanometers, etc.

There may be some minor variation in the diameters of nanoparticles of the same type. However, all of the diameters of nanoparticles 114-1 may be approximately the same (e.g., within 3 nanometers, within 2 nanometers, within 1 nanometer, within 10%, within 5%, within 3%, within 1%, etc.). Similarly, all of the diameters of nanoparticles 114-2 may be approximately the same (e.g., within 3 nanometers, within 2 nanometers, within 1 nanometer, within 10%, within 5%, within 3%, within 1%, etc.).

Diameter 114-2 may be less than 90% of the magnitude of diameter 114-1, less than 80% of the magnitude of diameter 114-1, less than 70% of the magnitude of diameter 114-1, less than 60% of the magnitude of diameter 114-1, less than 50% of the magnitude of diameter 114-1, less than 40% of the magnitude of diameter 114-1, greater than 40% of the magnitude of diameter 114-1, between 60% and 70% of the magnitude of diameter 114-1, between 50% and 80% of the magnitude of diameter 114-1, etc.

The ratio of total particles 102-1 to total particles 102-2 may be any desired value (e.g., 1:1, less than 1:1, greater than 1:1, etc.). In other words, of the total number of nanoparticles, any desired percentage may be large particles 102-1 (e.g., 50%, less than 50%, greater than 50%, less than 30%, greater than 70%, etc.). The remaining percentage may be small particles 102-2 (e.g., 50%, less than 50%, greater than 50%, less than 30%, greater than 70%, etc.).

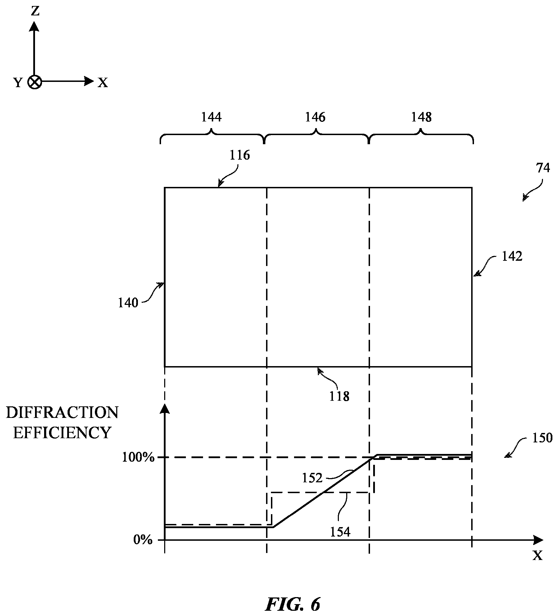

If desired, SRG structure 74 may be modulated to provide SRG structure 74 with different diffraction efficiencies along its length. FIG. 6 is a front view showing how SRG structure 74 may be provided with different diffraction efficiencies along its length (dimension X). As shown in FIG. 6, SRG structure 74 may have a third (left) edge 140 and a fourth (right) edge 142 (e.g., where edges 116 and 118 extend from edge 140 to edge 142).

SRG structure 74 may have a central region 146, a first (left) peripheral region 144 between central region 146 and left edge 140, and a second (right) peripheral region 148 between central region 146 and right edge 142. Central region 146 may span any desired amount of the length of SRG structure 74 parallel to the X-axis (e.g., 25%, 10%, 30%, 50%, more than 50%, less than 50%, more than 10%, more than 20%, more than 30%, more than 40%, less than 40%, less than 30%, less than 20%, etc.). Peripheral region 144 may sometimes be referred to herein as nasal region 144 (e.g., because region 144 sits at or adjacent to the user's nose when the user is viewing the display). Peripheral region 148 may sometimes be referred to herein as temple region 148 (e.g., because region 148 sits at or adjacent to the user's temple when the user is viewing the display). This is merely illustrative and, in practice, region 144 may be a temple region and region 148 may be a nasal region (e.g., depending on the location of SRG structure 74 within the system).

In the example of FIG. 6, image light 38 is incident upon SRG structure 74 at left edge 140. This is merely illustrative and, in other implementations, image light 38 may be incident upon SRG structure 74 at right edge 142. Graph 150 of FIG. 6 plots diffraction efficiency as a function of position along the length of SRG structure 74 (e.g., positions along the X-axis), in the example where image light 38 is incident upon SRG structure 74 at left edge 140. The SRGs in SRG structure 74 may be modulated to configure SRG structure 74 to exhibit maximum diffraction efficiency within peripheral region 148 and minimum diffraction efficiency within peripheral region 144. This may serve to prevent SRG structure 74 from diffracting an excessive amount of image light 38 out of waveguide 50 before the image light has reached central region 146 and/or peripheral region 148, while also ensuring that any remaining image light 38 in peripheral region 148 is coupled out of the waveguide, thereby allowing the image light to fill eye box 24 with a brightness that is as uniform across the field of view of the eye box as possible.

As one example, SRG structure 74 may exhibits a diffraction efficiency characterized by curve 152 of graph 150. In this example, as shown by curve 152, SRG structure 74 exhibit maximum (e.g., 100%) diffraction efficiency within peripheral region 148, minimum (e.g., 0%) diffraction efficiency within peripheral region 144, and a linear gradient diffraction efficiency within central region 146 from peripheral region 148 to peripheral region 144. While the maximum diffraction efficiency is sometimes referred to herein as 100% diffraction efficiency, this percentage is a relative value measured with respect to the overall peak diffraction efficiency of the SRG (e.g., the overall maximum diffraction efficiency each SRG may be less than 100% diffraction efficiency in practice).

As another example, SRG structure 74 may be modulated to exhibit a diffraction efficiency characterized by a step function, as shown by curve 154 (e.g., with a single intermediate diffraction efficiency within central region 146). These examples are merely illustrative. Some or all of curve 154 may be curved rather than linear. Some or all of curve 152 may be curved rather than linear. Curve 154 may have any desired number of steps (e.g., a plurality of steps to approximate a sloped line). In general, any desired modulation function may be used across the length of SRG structure 74.

The diffraction efficiency of SRG structure 74 may be modulated in this way by varying the geometry of the peaks and troughs used to form each of the SRGs and/or by increasing the number of grating vectors in SRG structure 74 along the X-axis, as examples.

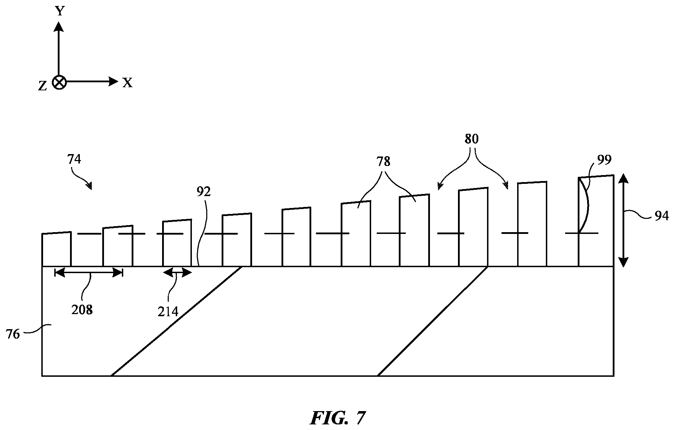

FIGS. 7-9 are cross-sectional side views of illustrative SRGs that have varying diffraction efficiency. Specifically the depth of the grating may be modulated to selectively adjust the diffraction efficiency of the SRG. As shown in FIG. 7, ridges 78 may be formed on SRG substrate 76. Substrate 76 may be formed from glass or another desired material. Ridges 78 may be formed from a high-index material such as titanium dioxide or silicon nitride. The index of refraction of ridges 78 may be greater than 1.5, greater than 1.8, greater than 2.0, greater than 2.2, greater than 2.4, greater than 2.5, etc.

In FIG. 7, substrate 76 has a planar upper surface 92. In FIG. 7, the ridge thickness 94 is equivalent to the depth of the corresponding troughs 80. The ridges each have a thickness 94 that changes as a function of the X-position across the SRG structure. On the left side of FIG. 7 (e.g., closest to peripheral region 144 of the SRG structure), the ridges 78 are thinner than on the right side of FIG. 7 (e.g., closest to peripheral region 148 of the SRG structure). In FIG. 7, the ridge thickness gradually (e.g., continuously and monotonically) increases in the X-direction. This example is merely illustrative. The ridge height may follow any desired function (e.g., the curves described in connection with FIG. 6). The ridge height is proportional to diffraction efficiency.

As shown in FIG. 7, the depth modulation of the ridges may be characterized by an angle of inclination 99. This angle characterizes how the depth of the ridges changes across the SRG structure. Angle 99 may be less than 10 degrees, less than 1 degree, less than 0.1 degree, less than 0.01 degree, less than 0.001 degree, less than 0.0001 degree, etc. As one illustrative example, the ridge depth changes by 400 nanometers across 20 millimeters in the X-direction. This results in an angle 99 of 0.0011 degrees.

The magnitude of the height 94 of each ridge may be greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, between 50 nanometers and 1000 nanometers, etc.

Each ridge in FIG. 7 may have a width 214. Width 214 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, between 300 nanometers and 400 nanometers, etc.

The center-to-center spacing between the ridges (pitch) 208 may be any desired magnitude (e.g., greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 300 nanometers and 400 nanometers, between 100 nanometers and 750 nanometers, etc.).

The duty cycle of the ridges (defined as ridge width 214 divided by ridge pitch 208) may be greater than 60%, greater than 70%, greater than 80%, greater than 90%, greater than 95%, less than 99%, less than 70%, less than 80%, less than 90%, less than 95%, between 60% and 99%, etc.

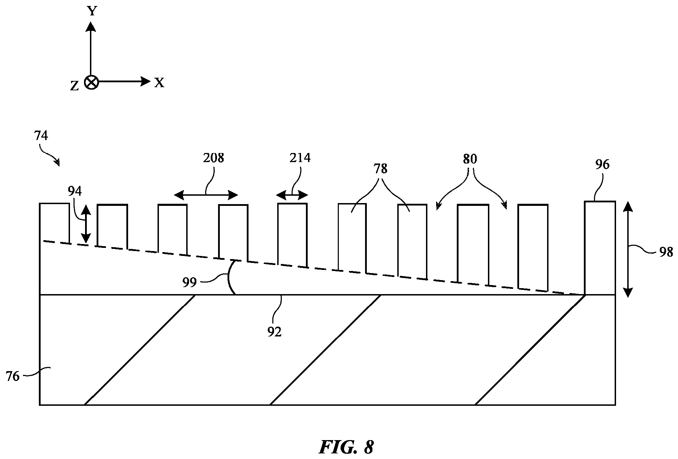

Another option for modulating grating depth is shown in FIG. 8. As shown in FIG. 8, ridges 78 may be formed on SRG substrate 76. Substrate 76 may be formed from glass or another desired material. Ridges 78 may be formed from a high-index material such as titanium dioxide or silicon nitride. The index of refraction of ridges 78 may be greater than 1.5, greater than 1.8, greater than 2.0, greater than 2.2, greater than 2.4, greater than 2.5, etc.

In FIG. 8, substrate 76 has a planar upper surface 92. Each ridge 78 has an upper surface 96 that is separated from substrate surface 92 by distance 98. Distance 98 is the same for each one of ridges 78. Troughs 80, meanwhile have different thicknesses 94 across the SRG structure. The troughs each have a thickness 94 that changes as a function of the X-position across the SRG structure. On the left side of FIG. 8 (e.g., closest to peripheral region 144 of the SRG structure), the troughs 98 are thinner than on the right side of FIG. 8 (e.g., closest to peripheral region 148 of the SRG structure). In FIG. 8, the trough thickness gradually (e.g., continuously and monotonically) increases in the X-direction. This example is merely illustrative. The trough thickness may follow any desired function (e.g., the curves described in connection with FIG. 6). The trough height is proportional to diffraction efficiency.

As shown in FIG. 8, the depth modulation of the ridges may be characterized by an angle of inclination 99. This angle characterizes how the depth of the ridges changes across the SRG structure. Angle 99 may be less than 10 degrees, less than 1 degree, less than 0.1 degree, less than 0.01 degree, less than 0.001 degree, less than 0.0001 degree, etc. As one illustrative example, the ridge (and trough) depth changes by 400 nanometers across 20 millimeters in the X-direction. This results in an angle 99 of 0.0011 degrees.

The magnitude of the depth 94 of each trough may be greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, between 50 nanometers and 1000 nanometers, etc.

Each ridge in FIG. 8 may have a width 214. Width 214 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, etc.

The center-to-center spacing between the ridges (pitch) 208 may be any desired magnitude (e.g., greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, etc.).

The duty cycle of the ridges (defined as ridge width 214 divided by ridge pitch 208) may be greater than 60%, greater than 70%, greater than 80%, greater than 90%, greater than 95%, less than 99%, less than 70%, less than 80%, less than 90%, less than 95%, between 60% and 99%, etc.

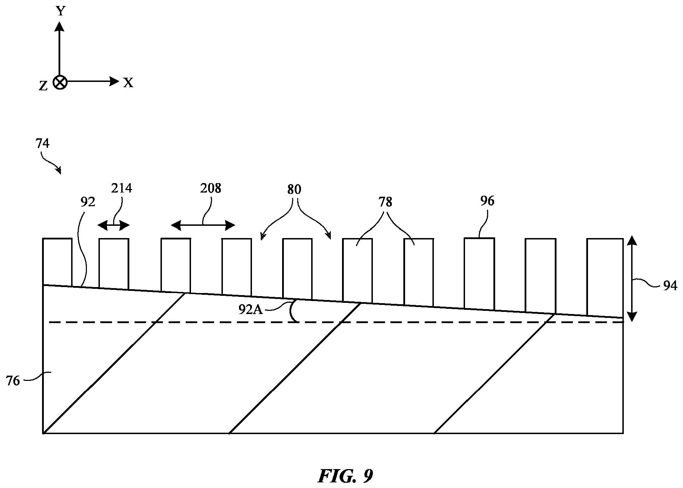

Another option for modulating the depth of the SRG structure is shown in FIG. 9. As shown in FIG. 9, ridges 78 may be formed on SRG substrate 76. Substrate 76 may be formed from glass or another desired material. Ridges 78 may be formed from a high-index material such as titanium dioxide or silicon nitride. The index of refraction of ridges 78 may be greater than 1.5, greater than 1.8, greater than 2.0, greater than 2.2, greater than 2.4, greater than 2.5, etc.

In FIG. 9, substrate 76 has a sloped upper surface 92. Upper surface 92 is at an angle 92A relative to the X-axis (e.g., the lower surface of substrate 76). Angle 92A may be less than 10 degrees, less than 1 degree, less than 0.1 degree, less than 0.01 degree, less than 0.001 degree, less than 0.0001 degree, etc. As one illustrative example, the substrate (and, correspondingly, the ridge depth) changes by 400 nanometers across 20 millimeters in the X-direction. This results in an angle 92A of 0.0011 degrees. Care may be taken to ensure that the sloped surface 92 does not adversely impact the waveguiding properties of substrate 76.

In FIG. 9, the ridge thickness 94 is equivalent to the depth of the corresponding troughs 80. The ridges each have a thickness 94 that changes as a function of the X-position across the SRG structure. However, the upper surfaces 96 the ridges are coplanar and parallel to the X-axis. In other words, the upper surfaces are not parallel to the sloped upper surface 92 of substrate 76.

On the left side of FIG. 9 (e.g., closest to peripheral region 144 of the SRG structure), the ridges 78 are thinner than on the right side of FIG. 9 (e.g., closest to peripheral region 148 of the SRG structure). In FIG. 9, the ridge thickness gradually (e.g., continuously and monotonically) increases in the X-direction. This example is merely illustrative. The ridge height may follow any desired function (e.g., the curves described in connection with FIG. 6). The ridge height is proportional to diffraction efficiency.

The magnitude of the depth 94 of each ridge may be greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, between 50 nanometers and 1000 nanometers, etc.

Each ridge in FIG. 9 may have a width 214. Width 214 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, etc.

The center-to-center spacing between the ridges (pitch) 208 may be any desired magnitude (e.g., greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, etc.).

The duty cycle of the ridges (defined as ridge width 214 divided by ridge pitch 208) may be greater than 60%, greater than 70%, greater than 80%, greater than 90%, greater than 95%, less than 99%, less than 70%, less than 80%, less than 90%, less than 95%, between 60% and 99%, etc.

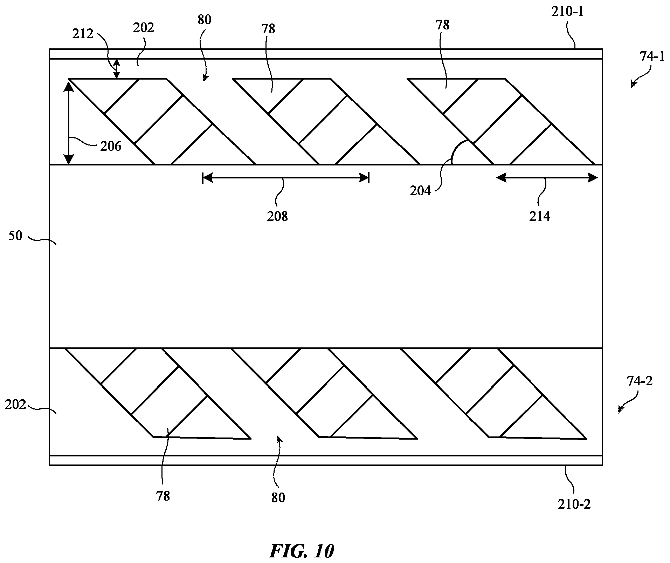

An additional arrangement for SRG structures in device 10 is shown in the cross-sectional side view of FIG. 10. As shown in FIG. 10, a first SRG structure 74-1 may be formed on a first side of waveguide 50 and a second SRG structure 74-2 may be formed on a second side of waveguide 50. Waveguide 50 may be formed from a high-index material such as glass. The index of refraction of waveguide 50 may be greater than 1.5, greater than 1.7, greater than 1.8, greater than 1.9, greater than 2.0, greater than 2.2, greater than 2.4, greater than 2.5, between 1.9 and 2.1, etc. Each SRG structure 74 includes ridges 78 that are formed from a high-index material. The material used for ridges 78 may be silicon nitride, titanium dioxide or another desired high-index material. The index of refraction of ridges 78 may be greater than 1.5, greater than 1.8, greater than 2.0, greater than 2.2, greater than 2.4, greater than 2.5, etc.

An encapsulation layer 202 is formed over ridges 78. The encapsulation layer 202 conforms to ridges 78 and fills the troughs 80 between the ridges. The encapsulation layer 202 may have a lower refractive index than ridges 78 (e.g., by greater than 0.1, greater than 0.3, greater than 0.5, greater than 0.7, greater than 1.0, etc.). The index of refraction of material 202 may be less than 1.6, less than 1.5, less than 1.4, between 1.3 and 1.6, etc. Silicon dioxide or any other desired material may be used for encapsulant 202.

The encapsulation layer 202 may instead have a higher refractive index than ridges 78 (e.g., by greater than 0.1, greater than 0.3, greater than 0.5, greater than 0.7, greater than 1.0, etc.). The index of refraction of material 202 may be greater than 2.0, greater than 2.2, greater than 2.4, between 2.0 and 2.6, etc. However, forming encapsulation layer 202 with a lower refractive index than ridges 78 may result in a higher contrast than forming encapsulation layer 202 with a higher refractive index than ridges 78.

Ridges 78 may be slanted such that each ridge has sidewalls at an angle 204 relative to the upper/lower surfaces of substrate 50. Angle 204 may be greater than 45 degrees, greater than 55 degrees, greater than 65 degrees, between 45 degrees and 70 degrees, or any other desired angle. Each ridge may have a height 206. Height 206 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, etc. Each ridge may have a width 214. Width 214 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, between 300 nanometers and 400 nanometers, etc.

The center-to-center spacing between the ridges (pitch) 208 may be any desired magnitude (e.g., greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, between 300 nanometers and 400 nanometers, etc.).

The duty cycle of the ridges (defined as ridge width 214 divided by ridge pitch 208) may be greater than 60%, greater than 70%, greater than 80%, greater than 90%, greater than 95%, less than 99%, less than 70%, less than 80%, less than 90%, less than 95%, between 60% and 99%, etc.

Encapsulation 202 may have a thickness 212 over the ridges 78. Thickness 212 may be any desired magnitude (e.g., less than 1000 nanometers, less than 750 nanometers, less than 500 nanometers, less than 250 nanometers, less than 100 nanometers, less than 50 nanometers, less than 30 nanometers, less than 15 nanometers, less than 10 nanometers, less than 5 nanometers, 0 nanometers, between 50 nanometers and 150 nanometers, between 0 nanometers and 1000 nanometers, etc.). In some cases, the encapsulant may be omitted over ridges 78 (e.g., a thickness of 0 nanometers) and the SRG structure has a planar upper surface that alternates between encapsulant portions and ridge portions.

An anti-reflective coating 210 may optionally be formed over one or both SRG structures. In FIG. 10, a first anti-reflective coating 210-1 is formed over SRG structure 74-1 and a second anti-reflective coating 210-2 is formed over SRG structure 74-2. Including an anti-reflective coating 210 increases the flexibility of the requirement of thickness 212 of encapsulant 202. Without an anti-reflective coating 210, thickness 212 may be selected to optimize anti-reflective and leakage performance.

In FIG. 10, waveguide 50 may serve as the SRG substrate for both SRG structures 74-1 and 74-2. This example is merely illustrative. Additional, dedicated substrates may be included in each SRG structure if desired.

The diffraction efficiency of SRG structure 74-1 and/or 74-2 may be modulated across the length of the structure to optimize efficiency and uniformity (as discussed in connection with FIG. 6). The duty cycle, ridge height, slant angle, trough depth, or any combination of these properties may change as a function of position to modulate the diffraction efficiency in this way.

The grating structures of FIG. 10 may suppress world-side emission (e.g., light that undesirably exits waveguide 50 in the positive Y-direction instead of in the negative Y-direction towards eye box 24) and cosmetic rainbow while increasing user-side brightness for a fixed input power. In the example of FIG. 10, the grating structures are patterned on both sides of waveguide 50 with overlapped cross-coupling and out-coupling gratings. However, in an alternate arrangement, grating structures of this type may instead be patterned on a single side of waveguide 50 with spatially separate cross-coupling and out-coupling gratings. There may be any desired number of waveguides (and air gaps) between the first and second SRG structures.

The SRG structures in FIG. 10 are asymmetrical, with the angle of the ridges in the SRG structures oriented to direct light to the preferred emission side and in the cross-coupling direction.

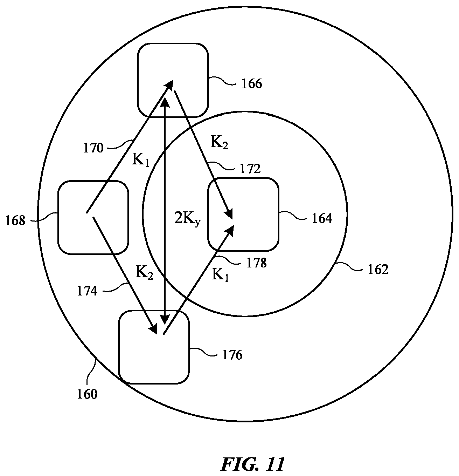

FIG. 11 is a k-space (momentum space) diagram that illustrates one example of the diffraction operations performed by SRG structures 74 in FIG. 10 on image light 38. The k-space diagram in FIG. 11 is a two-dimensional cross section of a three-dimensional k-sphere that characterizes the operation of SRG structures 74 in three dimensions (e.g., one of the components of the k-sphere is omitted from FIG. 11 for the sake of clarity). Region 164 represents the field of view as provided at eye box 24. Region 168 represents the image light 38 that is coupled into waveguide 50 by input coupler 52 (FIG. 2) and that is incident upon SRG structures 74. The region between circles 162 and 160 represents the total internal reflection (TIR) range of waveguide 50 (e.g., when image light 38 lies between circles 162 and 160, the image light will propagate along waveguide 50 via TIR).

Arrow 170 schematically represents the first diffraction operation performed by SRG 74-1 on the image light 38 incident upon SRG structure 74-1. This first diffraction performs the cross-coupler function of SRG 74-1, helping to expand the image light (e.g., in the positive Z-direction). The length of arrow 170 corresponds to the magnitude of the grating vector k₁ associated with SRG 74-1 and the orientation of arrow 170 corresponds to the orientation of grating vector k₁. Region 166 represents the image light that has been expanded by SRG 74-1 (e.g., as obtained from the vector addition of grating vector k₁ with points in region 168).

Arrow 174 schematically represents the first diffraction operation performed by SRG 74-2 on the image light 38 incident upon SRG structure 74-2. This first diffraction performs the cross-coupler function of SRG 74-2, helping to expand the image light (e.g., in the negative Z-direction). The length of arrow 174 corresponds to the magnitude of the grating vector k₂ associated with SRG 74-2 and the orientation of arrow 174 corresponds to the orientation of grating vector k₂. Region 176 represents the image light that has been expanded by SRG 74-2 (e.g., as obtained from the vector addition of grating vector k₂ with points in region 168).

Arrow 172 schematically represents the second diffraction operation performed by SRG 74-2, on the image light 38 that has already been expanded by SRG 74-1. This second diffraction performs the output coupler function of SRG 74-2, serving to couple the expanded image light out of waveguide 50 (e.g., in the -Y direction as shown in FIG. 2). The length of arrow 172 corresponds to the magnitude of the grating vector k₂ associated with SRG 74-2 and the orientation of arrow 172 corresponds to the orientation of grating vector k₂ (e.g., arrows 172 and 174 are parallel to each other and have the same length). This image light is coupled out of waveguide 50 and directed towards eye box 24 because the vector addition of grating vector k₂ with points in region 166 falls outside of the TIR range of waveguide 50 and within the field of view of eye box 24 (region 164).

Arrow 178 schematically represents the second diffraction operation performed by SRG 74-1, on the image light 38 that has already been expanded by SRG 74-2. This second diffraction performs the output coupler function of SRG 74-1, serving to couple the expanded image light out of waveguide 50 (e.g., in the -Y direction as shown in FIG. 2). The length of arrow 178 corresponds to the magnitude of the grating vector k₁ associated with SRG 74-1 and the orientation of arrow 178 corresponds to the orientation of grating vector k₁ (e.g., arrows 170 and 178 are parallel to each other and have the same length). This image light is coupled out of waveguide 50 and directed towards eye box 24 because the vector addition of grating vector k₁ with points in region 176 falls outside of the TIR range of waveguide 50 and within the field of view of eye box 24 (region 164).

Grating vector k₁ may have x and y components (kₓ₁, k_{y1}). Grating vector k₂ may have x and y components (kₓ₂, k_{y2}). The magnitude of kₓ₁ may be equal to the magnitude of kₓ₂. The magnitude of k_{y1} may be equal to the magnitude of k_{y2}. The grating periodicity of the SRG structures may additionally be modulated in 2-D, with the secondary grating vector being equal to (kₓ₁ - kₓ₂, k_{y1} + k_{y2}). Because kₓ₁ equals kₓ₂ and k_{y1} equals k_{y2}, the secondary grating vector simplifies to (0, 2k_{y}). Modulating the grating periodicity with the secondary grating vector 2k_{y} may cause the grating lines to be wavy instead of straight. FIG. 11 shows how the secondary grating vector 2k_{y} may couple image light between regions 166 and 176. In other words, the secondary grating vector causes light to be spread from the top and bottom of the waveguide back towards the center of the waveguide (e.g., light at the top of the waveguide is directed in the negative Z-direction and light at the bottom of the waveguide is directed in the positive Z-direction). Spreading the light in this way causes more interactions of the light with the SRG structures, increasing the efficiency of the optical system.

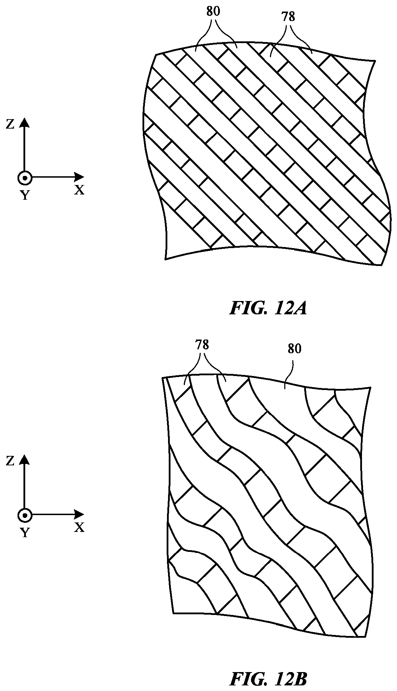

As shown in FIG. 12A, without the secondary grating vector, ridges 78 may be straight ridges when viewed in the Y-direction. As shown in FIG. 12B, with the secondary grating vector, ridges 78 may be wavy ridges. In other words, the edges of the ridges may follow a non-linear (sometimes referred to as wavy or serpentine) path.

In FIG. 10, the sidewalls of each ridge 78 may be approximately parallel (e.g., within 5 degrees, within 3 degrees, within 1 degree, etc.). This example is merely illustrative. If desired, ridges may be included that have non-parallel sidewalls. For example, a blazed grating may be used in each SRG structure.

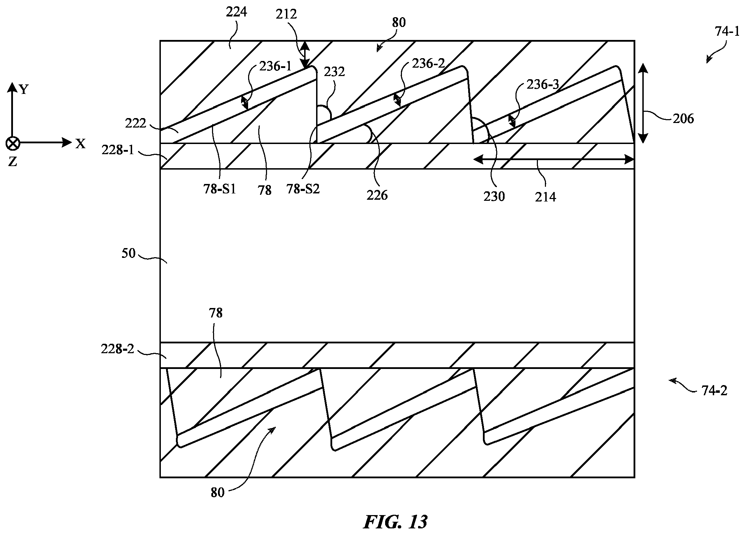

FIG. 13 is a cross-sectional side view of an optical system that includes blazed SRG structures. As shown in FIG. 13, a first SRG structure 74-1 may be formed on a first side of waveguide 50 and a second SRG structure 74-2 may be formed on a second side of waveguide 50. Waveguide 50 may be formed from a high-index material such as glass. The index of refraction of waveguide 50 may be greater than 1.5, greater than 1.7, greater than 1.8, greater than 1.9, greater than 2.0, greater than 2.2, greater than 2.4, greater than 2.5, between 1.9 and 2.1, etc. Each SRG structure 74 includes ridges 78 that are formed from a high-index material. The material used for ridges 78 may be silicon nitride, titanium dioxide or another desired high-index material. The index of refraction of ridges 78 may be greater than 1.5, greater than 1.8, greater than 2.0, greater than 2.2, greater than 2.4, greater than 2.5, etc.

Each ridge is defined by first and second surfaces 78-S1 and 78-S2. Each ridge is coated with a low-index coating 222 on surface 78-S1. The coating 222 may have a lower refractive index than ridges 78 (e.g., by greater than 0.1, greater than 0.3, greater than 0.5, greater than 0.7, greater than 1.0, etc.). The index of refraction of material 222 may be less than 1.6, less than 1.5, less than 1.4, between 1.3 and 1.6, etc. Silicon dioxide or any other desired material may be used for coatings 222.

The coating 222 may instead have a higher refractive index than ridges 78 (e.g., by greater than 0.1, greater than 0.3, greater than 0.5, greater than 0.7, greater than 1.0, etc.). The index of refraction of material 222 may be greater than 2.0, greater than 2.2, greater than 2.4, between 2.0 and 2.6, etc. However, forming coating 222 with a lower refractive index than ridges 78 may result in a higher contrast than forming coating 222 with a higher refractive index than ridges 78.

An encapsulation layer 224 is formed over the coated ridges 78. The encapsulation layer 224 conforms to ridges 78 (and coatings 222) and fills the troughs 80 between the ridges. Encapsulant 224 may be formed from a high-index material. The material used for encapsulation layer 224 may be silicon nitride, titanium dioxide or another desired high-index material. The index of refraction of encapsulation layer 224 may be greater than 1.5, greater than 1.8, greater than 2.0, greater than 2.2, greater than 2.4, greater than 2.5, etc. In one possible arrangement, the same material (e.g., silicon nitride) may be used for both ridges 78 and encapsulation layer 224.

A residual substrate 228 may be interposed between each blaze grating and waveguide 50. As shown, substrate 228-1 is interposed between SRG structure 74-1 and waveguide 50. Substrate 228-2 is interposed between SRG structure 74-2 and waveguide 50. Substrates 228-1 and 228-2 may sometimes be referred to as SRG substrates. Residual substrates 228 may be formed from the same material as ridges 78. The residual substrate may be left over from a nanoimprinting process in which ridges 78 are formed. The residual substrate may be as thin as possible. However, some residual substrate may be required to ensure the SRG structures may be adhered to waveguide 50. The thickness of each residual substrate 228 may be less than 100 nanometers, less than 75 nanometers, less than 50 nanometers, etc.

The surface 78-S1 of each ridge is at an angle 226 relative to the upper surface of substrate 50 / residual substrate 228. Angle 226 (sometimes referred to as the blaze angle) may have any desired magnitude (e.g., between 10 degrees and 40 degrees, between 15 degrees and 40 degrees, between 25 degrees and 35 degrees, between 25 degrees and 30 degrees, greater than 10 degrees, greater than 20 degrees, greater than 30 degrees, greater than 40 degrees, less than 10 degrees, less than 20 degrees, less than 30 degrees, less than 40 degrees, etc.).

The surface 78-S2 of each ridge is at an angle 230 relative to the upper surface of substrate 50 / residual substrate 228. Angle 230 (sometimes referred to as the anti-blaze angle) may have any desired magnitude (e.g., greater than 75 degrees, greater than 85 degrees, greater than 90 degrees, greater than 100 degrees, greater than 110 degrees, between 85 degrees and 110 degrees, less than 90 degrees, less than 110 degrees, etc.).

Each trough has an open angle 232. Angle 232 may be between 60 degrees and 120 degrees, between 70 degrees and 110 degrees, between 80 degrees and 100 degrees, between 75 degrees and 85 degrees, between 85 degrees and 95 degrees, greater than 60 degrees, greater than 70 degrees, greater than 80 degrees, greater than 90 degrees, greater than 100 degrees, greater than 110 degrees, less than 60 degrees, less than 70 degrees, less than 80 degrees, less than 90 degrees, less than 100 degrees, less than 110 degrees, etc.

Each ridge may have a height 206. Height 206 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, etc. Each ridge may have a width 214. Width 214 may be greater than 50 nanometers, greater than 100 nanometers, greater than 200 nanometers, greater than 300 nanometers, greater than 500 nanometers, less than 50 nanometers, less than 100 nanometers, less than 200 nanometers, less than 300 nanometers, less than 500 nanometers, between 50 nanometers and 300 nanometers, between 300 nanometers and 400 nanometers, etc.

In FIG. 13, because the duty cycle is equal to 100%, the ridge pitch may be equal to the ridge width. This example is merely illustrative. In general, the ridges may have any desired pitch (e.g., greater than 50 nanometers, greater than 100 nanometers, greater than 200 nanometers, greater than 300 nanometers, greater than 500 nanometers, greater than 750 nanometers, greater than 1000 nanometers, less than 50 nanometers, less than 100 nanometers, less than 200 nanometers, less than 300 nanometers, less than 500 nanometers, less than 750 nanometers, less than 1000 nanometers, between 200 nanometers and 400 nanometers, between 100 nanometers and 750 nanometers, etc.).

Encapsulation 224 may have a thickness 212 over the ridges 78. Thickness 212 may be any desired magnitude (e.g., less than 1000 nanometers, less than 750 nanometers, less than 500 nanometers, less than 250 nanometers, less than 100 nanometers, less than 50 nanometers, less than 30 nanometers, less than 15 nanometers, less than 10 nanometers, less than 5 nanometers, 0 nanometers, between 50 nanometers and 150 nanometers, between 0 nanometers and 1000 nanometers, etc.). In some cases, the encapsulant may be omitted over ridges 78 (e.g., a thickness of 0 nanometers) and the SRG structure has a planar upper surface that alternates between encapsulant portions and coatings 222.

An anti-reflective coating may optionally be formed over one or both SRG structures in FIG. 13 (similar to as shown in FIG. 10).

Each coating 222 may have a respective thickness 236. In general, each coating may have any desired thickness (e.g., greater than 10 nanometers, greater than 15 nanometers, greater than 20 nanometers, greater than 30 nanometers, greater than 50 nanometers, less than 10 nanometers, less than 15 nanometers, less than 20 nanometers, less than 30 nanometers, less than 50 nanometers, between 30 nanometers and 40 nanometers, between 20 nanometers and 50 nanometers, etc.). The thickness of the coatings in a given SRG structure may be uniform or may be non-uniform. For example, the coating thickness may vary along the X-direction to vary diffraction efficiency along the X-direction. As an example, a first ridge may have a first coating thickness 236-1, a second ridge may have a second coating thickness 236-2, a third ridge may have a third coating thickness 236-3. The magnitude of thicknesses 236-1, 236-2, and 236-3 may be different. Thickness 236-2 may be greater than thickness 236-1 and thickness 236-3 may be greater than thickness 236-2. Alternatively, thickness 236-2 may be less than thickness 236-1 and thickness 236-3 may be less than thickness 236-2.

The diffraction efficiency of SRG structure 74-1 and/or 74-2 may be modulated across the length of the structure to optimize efficiency and uniformity (as discussed in connection with FIG. 6). The duty cycle, ridge height, blaze angle, trough depth, coating thickness, or any combination of these properties may change as a function of position to modulate the diffraction efficiency in this way.

The grating vector options and functionality of the SRG structures in FIG. 13 is the same as described in connection with FIG. 10. The grating structures of FIG. 13 may suppress world-side emission (e.g., light that undesirably exits waveguide 50 in the positive Y-direction instead of in the negative Y-direction towards eye box 24) and cosmetic rainbow while increasing user-side brightness for a fixed input power. In the example of FIG. 13, the grating structures are patterned on both sides of waveguide 50 with overlapped cross-coupling and out-coupling gratings. However, in an alternate arrangement, grating structures of this type may instead be patterned on a single side of waveguide 50 with spatially separate cross-coupling and out-coupling gratings. There may be any desired number of waveguides (and air gaps) between the first and second SRG structures.

The SRG structures in FIG. 13 are asymmetrical, with the angle of the ridges in the SRG structures oriented to direct light to the preferred emission side and in the cross-coupling direction.

The k-space diagram of FIG. 11 described in connection with FIG. 10 also applies to the gratings of FIG. 13. As described in connection with FIGS. 10-12, the grating periodicity in FIG. 13 may be modulated with the secondary grating vector 2k_{y}, causing the grating lines to be wavy (as in FIG. 12B) instead of straight (as in FIG. 12A).

The aforementioned structures may be manufacturing using any desired techniques (e.g., nano-imprinting, photo-lithography, thin-film deposition, spin coating, etc.).

The high-index material (e.g., the ridges) of any of the aforementioned embodiments may be formed using nanoparticles of one or more sizes of the type shown in FIGS. 4 and 5.

The ridges structures of FIG. 10 and/or FIG. 13 may extend at an angle relative to one another (e.g., between 10 degrees and 80 degrees, between 20 degrees and 70 degrees, between 30 degrees and 60 degrees, between 40 degrees and 50 degrees, between 5 degrees and 50 degrees, between 40 degrees and 85 degrees, etc.). In other words, the ridge structures on one side of substrate 50 are at a non-zero, non-orthogonal angle relative to the ridge structures on the opposing side of substrate 50.

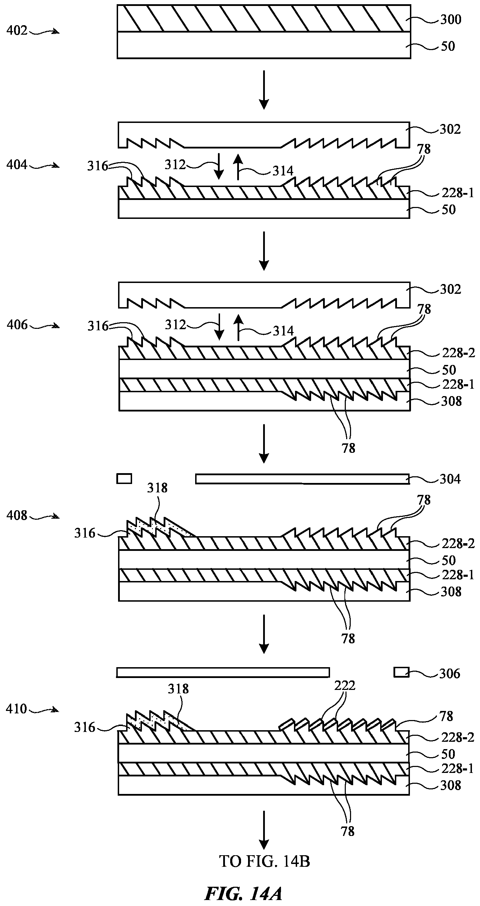

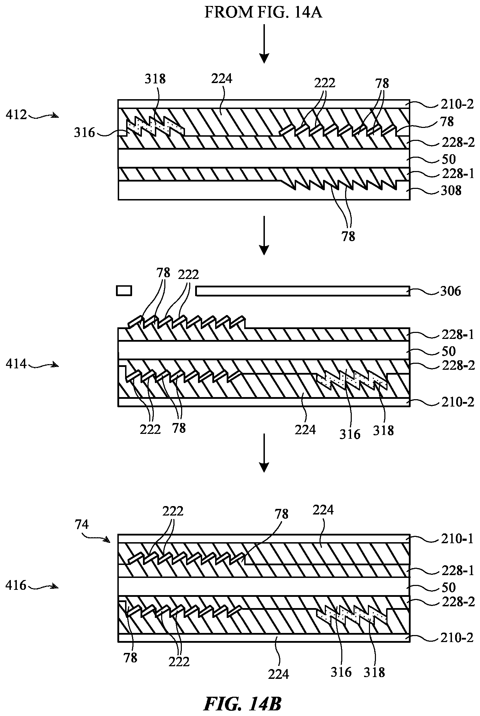

FIGS. 14A and 14B are diagrams showing method steps for forming an SRG structure 74 with a blazed grating (e.g., similar to the SRG structure of FIG. 13). At step 402 in FIG. 14A, a nanoimprinting material 300 (sometimes referred to as high index layer 300 or resin layer 300) may be deposited on SRG substrate 50. Substrate 50 may be formed from glass or another desired material. This deposition step may be performed using chemical vapor deposition (CVD), atomic layer deposition (ALD), high density plasma chemical vapor deposition (HDPCVP), physical vapor deposition (PVD), spin coating, or another desired technique. Material 300 may be silicon nitride or another desired material. The index of refraction of material 300 in step 402 may be greater than 1.5, greater than 1.8, greater than 2.0, greater than 2.2, greater than 2.4, greater than 2.5, between 1.8 and 2.0, etc.

At step 404, a nanoimprinting mold 302 is applied to layer 300. The nanoimprinting mold 302 may be moved in direction 312 (e.g., to stamp layer 300) then in direction 314 (e.g., removed from layer 300). Nanoimprinting mold 302 has surface features that impart a desired shape onto layer 300 (e.g., to define a blazed grating). As shown in FIG. 14A, at step 404, after nanoimprinting is completed, resin layer 300 may have ridge structures 78 present on residual substrate 228-1 and substrate 50. The ridge structures 78 form a blazed grating having a structure as shown and described in connection with FIG. 13.

Mold 302 may also have surface features that create ridges 316 in resin layer 300. Ridges 316 may later be used to form an input coupler for the optical system (e.g., input coupler 52 in FIG. 2).

Next, at step 406, substrate 50 may be flipped (so that residual surface 228-1 is on a lower surface of the substrate 50 instead of the upper surface as in step 404). Before or after being flipped, residual substrate 228-1 (and ridges 316/78) may be covered by a protective coating 308. The protective coating may conform to the ridges to protect the ridges from damage during the manufacturing process. The protective coating may be formed from a material that is easy to remove during later manufacturing steps (since the protective coating is a sacrificial layer that will not end up in the final optical system).

Also at step 406, the nanoimprinting mold 302 is applied to a resin layer (e.g., formed from the same material as layer 300 in step 402) on substrate 50. The nanoimprinting mold 302 may be moved in direction 312 (e.g., to stamp the resin layer) then in direction 314 (e.g., removed from the resin layer). Nanoimprinting mold 302 imparts ridges with the same shape as in step 404 onto the resin layer (e.g., to define an additional blazed grating). As shown in FIG. 14A, at step 406, after nanoimprinting is completed, the resin layer may have remaining ridge structures 78 present on residual substrate 228-2 and substrate 50. The ridge structures 78 on substrate 228-2 form a blazed grating having a structure as shown and described in connection with FIG. 13.

The ridge structures 78 on first and second opposing sides of substrate 50 therefore have the same cross-sectional shape (since they are formed using the same mold during the nanoimprinting process). The ridges structures may extend at an angle relative to one another when viewed in a direction parallel to the surface normal of substrate 50 (e.g., between 10 degrees and 80 degrees, between 20 degrees and 70 degrees, between 30 degrees and 60 degrees, between 40 degrees and 50 degrees, between 5 degrees and 50 degrees, between 40 degrees and 85 degrees, etc.).

At step 408, ridges 316 for the input coupler are coated with reflective material 318. Reflective material 318 may be a metal material such as aluminum or another desired material with a high reflectance. Reflective material 318 may have a reflectance that is greater than 80%, greater than 90%, greater than 95%, greater than 99%, etc. Reflective material 318 may be deposited on ridges 316 through mask 304. Mask 304 may block the reflective material 318 from being formed on the covered portions of substrate 50 and ridges 78. The reflective blazed grating formed by ridges 316 may form an input coupler such as input coupler 52 in FIG. 2.

At step 410, the blazed grating formed by ridges 78 is overcoated with a coating 222. The coating layer 222 may have a different refractive index than blazed ridges 78 (e.g., by greater than 0.1, greater than 0.3, greater than 0.5, greater than 0.7, greater than 1.0, etc.). The refractive index of coating 222 may be greater than the refractive index of blazed ridges 78 or lower than the refractive index of blazed ridges 78. The index of refraction of material 222 in step 410 may be less than 1.6, less than 1.5, less than 1.4, between 1.3 and 1.6, greater than 2.0, greater than 2.2, greater than 2.4, between 2.0 and 2.6, etc. Silicon dioxide, titanium dioxide, or any other desired material may be used for material 222.

Coating 222 may be deposited on ridges 78 through mask 306. Mask 306 may block the coating 222 from being formed on the covered portions of substrate 50 and ridges 316.

As discussed in connection with FIG. 6, SRG structure 74 may be modulated to provide SRG structure 74 with different diffraction efficiencies along its length. One possible way to modulate the diffraction efficiency of the blazed SRG structure 74 of FIGS. 13 and 14 is to vary the thickness of coating 222 on ridges 78. As discussed in connection with FIG. 13, the thickness of coating 222 may vary along the X-direction to vary diffraction efficiency along the X-direction. To achieve this varying thickness in coating 222, mask 306 may be a mesh mask with openings of varying sizes across the mask. In portions of mask 306 with smaller openings, the thickness of coating 222 will be smaller. In portions of mask 306 with larger openings, the thickness of coating 222 will be larger. The openings in mask 306 may vary in size in one direction (e.g., along the X-direction) or in two directions (e.g., along the X-direction and the Y-direction).

Another option for varying the thickness of coating 222 is to use a sliding mask. Mask 306 may block coating material 222. Mask 306 may have an opening through which material for the coating is deposited. The mask 306 may be moved (e.g., along the X-direction) during deposition to produce a varying thickness in coating 222. These examples for varying the thickness of coating 222 are merely illustrative. In general, any desired techniques may be used to vary the thickness of coating 222.

In step 412, shown in FIG. 14B, an encapsulation layer 224 is formed over the coated blazed grating. The encapsulation layer 224 conforms to ridges 78 and coating 222 and fills the troughs between the ridges. Encapsulation layer 224 may be formed from the same material as layer 228-2 and ridges 78. An anti-reflective coating 210-2 may optionally be added to the upper surface of encapsulation layer 224.

At step 414, the substrate 50 is again flipped (so that residual substrate 228-1 is on an upper surface of substrate 50). Protective coating 308 previously covering residual substrate 228-1 is removed. The blazed grating on residual substrate 228-1 is overcoated with a coating 222. The coating layer 222 may have a different refractive index than blazed ridges 78 (e.g., by greater than 0.1, greater than 0.3, greater than 0.5, greater than 0.7, greater than 1.0, etc.). The refractive index of coating 222 may be greater than the refractive index of blazed ridges 78 or lower than the refractive index of blazed ridges 78. The index of refraction of material 222 in step 410 may be less than 1.6, less than 1.5, less than 1.4, between 1.3 and 1.6, greater than 2.0, greater than 2.2, greater than 2.4, between 2.0 and 2.6, etc. Silicon dioxide, titanium dioxide, or any other desired material may be used for material 222. To achieve a varying thickness in coating 222, mask 306 may be a mesh mask with openings of varying sizes across the mask or mask 306 may be moved (e.g., along the X-direction) during deposition to produce a varying thickness in coating 222. The mask 306 used in step 414 may be the same mask (or a mask having the same structure) as the mask in step 410.

In step 416, an encapsulation layer 224 is formed over the coated blazed grating on residual substrate 228-1. The encapsulation layer 224 conforms to ridges 78 and coating 222 and fills the troughs between the ridges. Encapsulation layer 224 may be formed from the same material as layer 228-1 and ridges 78. An anti-reflective coating 210-1 may optionally be added to the upper surface of encapsulation layer 224.

Anti-reflective coatings 210-1 and 210-2 may optionally mitigate reflections by a greater amount for incident light with angles of incidence closer to the surface normal of substrate 50 (and encapsulation 224). For example, the anti-reflective coatings may mitigate reflections by a greater amount for incident light at a 0 degree angle relative to the surface normal than incident light at a 70 degree angle relative to the surface normal. In general, any desired type of anti-reflective coatings may be used (e.g., moth-eye antireflective structures with arrays of protuberances that form a region of graded refractive index, one or more thin dielectric layers with refractive indices selected to mitigate reflections, etc.).

The final SRG structure 74 produced using the techniques of FIGS. 14A and 14B has blazed gratings on first and second opposing sides of substrate 50. The blazed gratings include ridges having the same cross-sectional shape on each side of the substrate. The blazed gratings may be at a non-zero, non-orthogonal angle relative to one another (when viewed in a direction parallel to the surface normal of the substrate). An input coupler formed by a metallized (reflective) blazed grating is also included on one side of the substrate. Anti-reflective coatings 210 are included on first and second opposing sides of the substrate (e.g., on encapsulation 224).

As discussed in connection with FIG. 6, SRG structure 74 may be modulated to provide SRG structure 74 with different diffraction efficiencies along its length. One possible way to modulate the diffraction efficiency of the blazed SRG structure 74 of FIGS. 13 and 14 is to vary the thickness of coating 222 on ridges 78. Instead of or in addition to varying the thickness of coating 222 on ridges 78 to vary diffraction efficiency, the thickness of coating 222 on ridges 78 may be varied at the edges of the SRG structure to mitigate the visibility of the edge of the SRG structure.

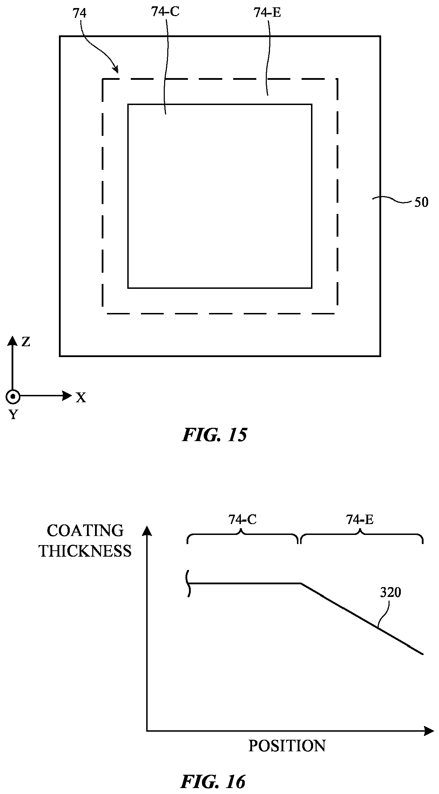

FIG. 15 is a top view of an illustrative SRG structure on a substrate 50. The SRG structure may have a double-sided blazed grating similar to as shown in FIGS. 13 and 14. As shown, the SRG structure has a central portion 74-C and an edge portion 74-E (sometimes referred to as peripheral portion). If there is an abrupt change in the thickness of coating 222 on the edges of the SRG structure, the edges of the SRG structure may be visible/detectable to a user during operation of system 10. Therefore, the thickness of coating 222 may slowly transition in edge portion 74-E from the thickness in central portion 74-C (at the interface of portions 74-C and 74-E) to a lower thickness (e.g., zero) at the periphery of the SRG structures (e.g., at the outer edge of portion 74-E).

FIG. 16 is a graph of coating thickness as a function of position showing how the thickness of coating 222 may slowly drop in edge portion 74-E. This gradual reduction in thickness may occur at any edge of the SRG structure, with the thickness reducing as a distance away from the center of the SRG structure increases. For example, in FIG. 16, the thickness may gradually drop when moving along the positive X-direction at the right edge of SRG structure 74, the thickness may gradually drop when moving along the negative X-direction at the left edge of SRG structure 74, the thickness may gradually drop when moving along the positive Z-direction at the upper edge of SRG structure 74, and the thickness may gradually drop when moving along the negative Z-direction at the lower edge of SRG structure 74.

The gradual drop(s) in the thickness of coating 222 may be achieved using a mask (e.g., mask 306 in FIGS. 14A and 14B) that is placed at a distance from substrate 50 during deposition of the coating material to create a grade in the thickness of the coating at the edges of the coating. As previously mentioned, the gradual drop(s) in the thickness of coating 222 at the edges of the SRG structure may be used in addition to or instead of the varying thickness of the coating across the SRG structure to vary diffraction efficiency. To achieve both of these thickness variations, a first mask may be placed at a distance from substrate 50 during deposition of the coating material to create a grade in the thickness of the coating at the edges of the coating. Additionally, a second mask with openings of varying sizes may be used to vary the thickness of the coating across the SRG structure to vary diffraction efficiency. Alternatively, a single mask may be used to achieve both desired thickness variations.

Optical system 20B may include one or more optical couplers (e.g., an input coupler, a cross-coupler, and an output coupler) formed at or on a waveguide. As examples, the optical system may have a sequential architecture or a combined architecture.

In a sequential architecture, image light may be directed to an input coupler, a cross coupler, and an output coupler in that order. As a specific example, a cross coupler may be at least partially laterally interposed between an input coupler (e.g., an input prism) and an output coupler. The input coupler may be laterally interposed between the cross coupler and an edge of the waveguide. The input prism may couple light into the waveguide. A cross coupler may expand the in-coupled light in a first direction and may provide the light to the output coupler. The output coupler may expand the light in a second direction that is different than the first direction.

In a combined architecture, image light may be directed from an input coupler to a combined optical coupler that performs the function of both a cross coupler and an output coupler. It may be desirable for the output coupler on the waveguide to fill as large of an eye box with as uniform-intensity image light as possible. The combined optical coupler may perform the functionality of both a cross-coupler and an output coupler for the waveguide. The combined optical coupler may therefore be configured to expand image light in one or more dimensions while also coupling the image light out of the waveguide. By using a combined optical coupler in this manner, space may be conserved within the display.

Any of the SRG structures described herein may be used to form any optical coupler (e.g., an input coupler, a cross coupler, an output coupler, a combined optical coupler that performs the function of both a cross coupler and an output coupler, etc.) in optical systems with either a sequential architecture or a combined architecture.

The foregoing is merely illustrative and various modifications can be made to the described embodiments. The foregoing embodiments may be implemented individually or in any combination.

## Claims

1. A display system comprising:
a waveguide (50) configured to propagate image light via total internal reflection; and
first and second surface relief grating structures (74-1,74-2) at the waveguide, wherein each one of the first and second surface relief grating structures comprises:
a blazed grating (74) that comprises ridges (78, 316) formed from a first material;
a coating (222) over the ridges formed from a second material that has a different refractive index than the first material; **characterized in that** it further comprises
an encapsulant (224) that conforms to the ridges and the coating, wherein the encapsulant is also formed from the first material.

2. The display system defined in claim 1, wherein a width of each one of the ridges is less than 500 nanometers.

3. The display system defined in claim 1, wherein the ridges have a pitch and wherein the pitch is less than 1000 nanometers.

4. The display system defined in claim 1, wherein the first material has a refractive index that is greater than 1.8.

5. The display system defined in claim 1, wherein the ridges are formed from a high-index material that includes nanoparticles, wherein each one of the nanoparticles includes a titanium dioxide core and a capping layer, and wherein the nanoparticles are distributed in a binder that has a refractive index that is greater than 1.55.

6. The display system defined in claim 5, wherein the nanoparticles include a first subset of nanoparticles having a first size and a second subset of nanoparticles having a second size that is different than the first size.

7. The display system defined in claim 1, wherein the first material comprises silicon nitride.

8. The display system defined in claim 1, wherein the first material comprises silicon dioxide.

9. The display system defined in claim 1, wherein the first material has a first refractive index, wherein the second material has a second refractive index, and wherein a difference between the first and second refractive indices is greater than 0.3.

10. The display system defined in claim 1, wherein the ridges are wavy ridges.

11. The display system defined in claim 1, wherein the second material comprises titanium dioxide.

12. The display system defined in claim 1, wherein each one of the first and second surface relief grating structures further comprises:
an anti-reflective coating formed over the encapsulant.

13. The display system defined in claim 12, wherein the waveguide has first and second opposing sides, wherein the first surface relief grating structure is formed on the first side of the waveguide, and wherein the second surface relief grating structure is formed on the second side of the waveguide.

14. The display system defined in claim 13, wherein the ridges of the first surface relief grating structure are at a non-zero, non-orthogonal angle relative to the ridges of the second surface relief grating structure.

15. The display system defined in claim 1, wherein the waveguide is configured to propagate the image light via total internal reflection in a direction and wherein a thickness of the coating over the ridges changes in the direction.

## Patentansprüche

1. Anzeigesystem, umfassend:
einen Wellenleiter (50), der dazu konfiguriert ist, Bildlicht über eine gesamte innere Reflektion auszubreiten; und
eine erste und eine zweite Oberflächenreliefgitterstruktur (74-1, 74-2) an dem Wellenleiter, wobei jede der ersten und der zweiten Oberflächenreliefgitterstruktur Folgendes umfasst:
ein gekerbtes Gitter (74), das Erhebungen (78, 316) umfasst, die aus einem ersten Material gebildet sind;
eine Beschichtung (222) über den Erhebungen, die aus einem zweiten Material gebildet ist, das einen unterschiedlichen Brechungsindex zu dem ersten Material aufweist; **dadurch gekennzeichnet, dass** sie ferner
ein Einkapselungsmittel (224) umfasst, das sich an die Erhebungen und die Beschichtung anpasst, wobei das Einkapselungsmittel ebenfalls aus dem ersten Material gebildet ist.

2. Anzeigesystem nach Anspruch 1, wobei eine Breite jeder der Erhebungen kleiner als 500 Nanometer ist.

3. Anzeigesystem nach Anspruch 1, wobei die Erhebungen eine Steigung aufweisen und wobei die Steigung kleiner als 1000 Nanometer ist.

4. Anzeigesystem nach Anspruch 1, wobei das erste Material einen Brechungsindex aufweist, der größer als 1,8 ist.

5. Anzeigesystem nach Anspruch 1, wobei die Erhebungen aus einem Hochindexmaterial gebildet sind, das Nanoteilchen beinhaltet, wobei jedes der Nanoteilchen einen Titandioxidkern und eine Verschlussschicht beinhaltet und wobei die Nanoteilchen in einem Bindemittel verteilt sind, das einen Brechungsindex aufweist, der größer als 1,55 ist.

6. Anzeigesystem nach Anspruch 5, wobei die Nanoteilchen einen ersten Teilsatz von Nanoteilchen, der eine erste Größe aufweist, und einen zweiten Teilsatz von Nanoteilchen, der eine zweite Größe aufweist, die sich von der ersten Größe unterscheidet, beinhalten.

7. Anzeigesystem nach Anspruch 1, wobei das erste Material Siliciumnitrid umfasst.

8. Anzeigesystem nach Anspruch 1, wobei das erste Material Siliciumdioxid umfasst.

9. Anzeigesystem nach Anspruch 1, wobei das erste Material einen ersten Brechungsindex aufweist, wobei das zweite Material einen zweiten Brechungsindex aufweist und wobei eine Differenz zwischen dem ersten und dem zweiten Brechungsindex größer als 0,3 ist.

10. Anzeigesystem nach Anspruch 1, wobei die Erhebungen wellenförmige Erhebungen sind.

11. Anzeigesystem nach Anspruch 1, wobei das zweite Material Titandioxid umfasst.

12. Anzeigesystem nach Anspruch 1, wobei jede der ersten und der zweiten Oberflächenreliefgitterstruktur ferner Folgendes umfasst:
eine reflexmindernde Beschichtung, die über dem Einkapselungsmittel gebildet ist.

13. Anzeigesystem nach Anspruch 12, wobei der Wellenleiter eine erste und eine zweite Seite aufweist, die sich gegenüberliegen, wobei die erste Oberflächenreliefgitterstruktur auf der ersten Seite des Wellenleiters gebildet ist und wobei die zweite Oberflächenreliefgitterstruktur auf der zweiten Seite des Wellenleiters gebildet ist.

14. Anzeigesystem nach Anspruch 13, wobei sich die Erhebungen der ersten Oberflächenreliefgitterstruktur in einem Nicht-Null-, nicht orthogonalen Winkel in Bezug auf die Erhebungen der zweiten Oberflächenreliefgitterstruktur befinden.

15. Anzeigesystem nach Anspruch 1, wobei der Wellenleiter dazu konfiguriert ist, das Bildlicht über die gesamte innere Reflektion in eine Richtung auszubreiten, und wobei sich eine Dicke der Beschichtung über den Erhebungen in der Richtung ändert.

## Revendications

1. Système d'affichage comprenant :
un guide d'ondes (50) configuré pour propager une lumière d'image par réflexion interne totale ; et
des première et seconde structures de réseaux à relief de surface (74-1, 74-2) au niveau du guide d'ondes, dans lequel chacune des première et seconde structures de réseaux à relief de surface comprend :
un réseau blazé (74) qui comprend des crêtes (78, 316) formées à partir d'un premier matériau :
un revêtement (222) sur les crêtes formé à partir d'un second matériau qui présente un indice de réfraction différent de celui du premier matériau ; **caractérisé en ce qu'**il comprend en outre
un encapsulant (224) qui se conforme aux crêtes et au revêtement, dans lequel l'encapsulant est également formé à partir du premier matériau.

2. Système d'affichage selon la revendication 1, dans lequel une largeur de chacune des crêtes est inférieure à 500 nanomètres.

3. Système d'affichage selon la revendication 1, dans lequel les crêtes présentent un pas et dans lequel le pas est inférieur à 1000 nanomètres.

4. Système d'affichage selon la revendication 1, dans lequel le premier matériau présente un indice de réfraction qui est supérieur à 1,8.

5. Système d'affichage selon la revendication 1, dans lequel les crêtes sont formées à partir d'un matériau à haut indice qui inclut des nanoparticules, dans lequel chacune des nanoparticules inclut un cœur de dioxyde de titane et une couche de coiffage, et dans lequel les nanoparticules sont distribuées dans un liant qui présente un indice de réfraction qui est supérieur à 1,55.

6. Système d'affichage selon la revendication 5, dans lequel les nanoparticules incluent un premier sous-ensemble de nanoparticules présentant une première taille et un second sous-ensemble de nanoparticules présentant une seconde taille qui est différente de la première taille.

7. Système d'affichage selon la revendication 1, dans lequel le premier matériau comprend du nitrure de silicium.

8. Système d'affichage selon la revendication 1, dans lequel le premier matériau comprend du dioxyde de silicium.

9. Système d'affichage selon la revendication 1, dans lequel le premier matériau présente un premier indice de réfraction, dans lequel le second matériau présente un second indice de réfraction, et dans lequel une différence entre les premier et second indices de réfraction est supérieure à 0,3.

10. Système d'affichage selon la revendication 1, dans lequel les crêtes sont des crêtes ondulées.

11. Système d'affichage selon la revendication 1, dans lequel le second matériau comprend du dioxyde de titane.

12. Système d'affichage selon la revendication 1, dans lequel chacune des première et seconde structures de réseaux à relief de surface comprend en outre :
un revêtement antireflet formé sur l'encapsulant.

13. Système d'affichage selon la revendication 12, dans lequel le guide d'ondes présente des premier et second côtés opposés, dans lequel la première structure de réseau à relief de surface est formée sur le premier côté du guide d'ondes, et dans lequel la seconde structure de réseau à relief de surface est formée sur le second côté du guide d'ondes.

14. Système d'affichage selon la revendication 13, dans lequel les crêtes de la première structure de réseau à relief de surface présentent un angle non nul et non orthogonal par rapport aux crêtes de la seconde structure de réseau à relief de surface.

15. Système d'affichage selon la revendication 1, dans lequel le guide d'ondes est configuré pour propager la lumière d'image par réflexion interne totale dans une direction et dans lequel une épaisseur du revêtement sur les crêtes change dans la direction.
